# EUROPÄISCHE PATENTSCHRIFT

(11) **EP 1 469 021 B1**
(45) Veröffentlichungstag und Bekanntmachung des Hinweises auf die Patenterteilung: **23.04.2014**
(21) Anmeldenummer: 04007083.1
(22) Anmeldetag: 24.03.2004
(51) Int. Cl.: C08F 265/06, C09J 4/06

(54) **(Meth)acrylatharz und Verwendung desselben**
(Meth)acrylate resin and its use
Résine acrylique ou méthacrylique et son utilisation

(30) Priorität: 15.04.2003 DE 10318443
(43) Veröffentlichungstag der Anmeldung: 20.10.2004
(73) Patentinhaber: Alteco Technik GmbH, 27239 Twistringen (DE)
(72) Erfinder: Lindemann, Jutta, 27248 Ehrenburg (DE)
(74) Vertreter: Scholz, Volker

(56) Entgegenhaltungen:
- EP-A- 1 152 014
- DE-A- 19 848 483
- DE-B- 1 253 629
- GB-A- 975 587
- GB-A- 1 083 486
- GB-A- 1 157 436
- US-A- 4 076 671
- US-A- 4 145 477
- US-A- 4 596 857

## Beschreibung

Die vorliegende Erfindung betrifft (Meth)acrylatharze und deren Verwendung.

(Meth)acrylatharze sind aus dem Stand der Technik zahlreich bekannt, welche die unterschiedlichsten Zusammensetzungen aufweisen, um für unterschiedlichste Anwendungsbereiche geeignet zu sein. Entsprechende Zusätze zu den (Meth)acrylatharzen, wie Vernetzungsmittel, Paraffine, Stabilisatoren oder dergleichen können die Eigenschaften des (Meth)acrylatharzes gezielt verbessern.

Beispielsweise können (Meth)acrylatharze als Formkörper, in Verbindung mit Glasfasern zum Erhalt hervorragender mechanischer Festigkeiten, für künstlerische Arbeiten, für Einbettungen, als Kleber, als Beschichtungsmassen oder auch als Holzimprägnierungen verwendet werden, siehe Kunststoffhandbuch, Band IX, Polymethacrylate, Carl Hanser Verlag, München 1975.

US4145477, EP1152014, US4076671, US4596857, GB1083486, und DE19848483 offenbaren (Meth)acrylatharz welches (Meth)acrylat, ein in (Meth)acrylat lösliches Polymer, und Paraffin umfasst.

Ein wichtiges Einsatzgebiet von (Meth)acrylatharzen ist das Gebiet der Reparatur und/oder Abdichtung von Röhren, insbesondere von Kanalröhren. Solche Röhren, die zumeist unterirdisch verlegt sind, können häufig Beschädigungen erleiden, was eine Reparatur bzw. eine Abdichtung derselben erforderlich macht, um einen vollständigen Austausch der defekten Röhre zu vermeiden. Diese Röhren bestehen häufig aus Steinzeug, Beton oder Kunststoff, wie PVC.

Zur Reparatur bzw. Abdichtung dieser Röhren wird ein sogenannter "Packer" in die Röhre eingeführt. Dieser Packer ist im wesentlichen ein mit einer Stretch-Folie überzogener Gummibalg, der mit Druckluft beaufschlagbar und somit ausdehnbar ist, um sich an den Durchmesser der zu reparierenden Röhre vollständig anpassen zu können. Vor Einführung des Packers in die zu reparierende Röhre wird dieser mit einer mit dem (Meth)acrylatharz getränkten Matte, insbesondere einer Glasfasermatte, versehen, wobei der Gummibalg vor seiner Einführung noch in einem im Vergleich zum Durchmesser der zu reparierenden Röhre kleineren Durchmesser vorliegt. Der Packer wird dann mit diesem kleineren Durchmesser in die Röhre eingeführt oder eingefahren und an der zu reparierenden Stelle mit Druckluft beaufschlagt, so daß er sich ausdehnt und die mit dem (Meth)acrylatharz getränkte Matte gegen den zu reparierenden Bereich der Röhre andrückt. Der zu reparierende Bereich kann dabei Längendimensionen von unter 1 m und bis zu 5 m ausmachen. Diese Matten werden von dem Gummibalg so lange gegen die Innenwand der zu reparierenden Röhre angedrückt, bis das (Meth)acrylatharz ausgehärtet ist. Dann wird die Druckluft aus dem Gummibalg abgelassen, so daß dessen Durchmesser vermindert wird, und der Packer wird wieder aus der Röhre entfernt.

Die bisher für eine solche Rohrreparatur bzw. -abdichtung verwendeten (Meth)acrylatharze wiesen eine nicht zufriedenstellende Haftung an der Innenseite des Rohrs auf, sowohl bei trockenen als auch feuchten Röhren. Auch die erzielte Dichtigkeit war in der Regel nicht zufriedenstellend, insbesondere bei der Abdichtung gegenüber drückendem Wasser.

Neben (Meth)acrylatharzen für die Verwendung zur Abdichtung von Röhren sind aus dem Stand der Technik ferner Wasserglas, Epoxid- und Polyharnstoffsysteme bekannt. Während alle drei Systeme aus dem Stand der Technik lediglich in einem eingeschränkten Temperaturbereich einsetzbar sind, sind insbesondere Polyharnstoffsysteme teuer und Epoxidharzsysteme als gesundheitlich bedenklich einzustufen. Zudem weisen diese drei Systeme nicht zufriedenstellende, lange Aushärtungszeiten auf, was eine Weiterverarbeitung verzögert, beispielsweise ein Ausfräsen von Abzweigstutzen innerhalb der reparierten Bereiche der Röhre.

Der vorliegenden Erfindung liegt somit die Aufgabe zugrunde, ein (Meth)acrylatharz bereitzustellen, das die Nachteile des Stands der Technik überwindet und insbesondere vorteilhaft bei der Reparatur und/oder Abdichtung von Röhren eingesetzt werden kann.

Die Aufgabe wird gelöst durch ein (Meth)acrylatharz, welches umfaßt: 30-40 Gew.-% (Meth)acrylat, 25-35 Gew.-% eines in (Meth)acrylat löslichen Polymers, 0,5-1 Gew.-% Paraffin, 5-40 Gew.-% Hydroxy(meth)acrylat, 0,2-1,0 Gew.-% Haftvermittler, 0,1-2 Gew.-% Entschäumer (alle Gew.-%-Angaben bezogen auf das (Meth)acrylatharz).

Bevorzugt ist das (Meth)acrylat Methylmethacrylat.

Bevorzugt ist ferner vorgesehen, daß das Polymer ein (Meth)acrylat-Homopolymer und/oder ein Copolymer umfaßt.

Weiterhin sieht die Erfindung dabei bevorzugt vor, daß das Homopolymer Polymethylmethacrylat ist.

Außerdem kann vorgesehen sein, daß das Copolymer ein Copolymer aus Methylmethacrylat und Butylmethacrylat, aus Methylmethacrylat und Ethylacrylat oder aus Vinylchlorid und Vinylacetat ist.

Weiterhin ist bevorzugt, daß das Hydroxy(meth)acrylat Hydroxyethylmethacrylat ist.

Auch kann vorgesehen sein, daß das (Meth)acrylatharz 1-10 Gew.-% Vernetzungsmittel, bevorzugt 1-3 Gew.-% enthält.

Ferner kann bevorzugt vorgesehen sein, daß das Vernetzungsmittel Ethylenglykoldimethacrylat, 1,4-Butandioldimethacrylat und/oder TriEthylenglykoldimethacrylat ist.

Eine vorteilhafte Ausführungsform der Erfindung sieht vor, daß das (Meth)acrylatharz 0,1 bis 1,0 Gew.-% Entschäumer (bezogen auf das (Meth)acrylatharz) umfaßt.

Bevorzugt ist auch, daß das (Meth)acrylatharz weitere übliche Additive wie 0,1-2 Gew.-% Co-Stabilisator und/oder 0,01-0,1 Gew.-% Stabilisator umfaßt.

Besonders bevorzugt ist, daß das (Meth)acrylatharz 0,02 bis 0,07 Gew.-% Stabilisator und/oder 0,5-1,0 Gew.-% Co-Stabilisator umfaßt.

Dabei kann vorgesehen sein, daß der Stabilisator 2,6-Di-tert.-butyl-4-methylphenol und der Co-Stabilisator Tri-(2,4-di-tert.-butyl-phenyl)phosphit ist.

Bevorzugt sieht die Erfindung vor, daß das (Meth)acrylatharz 0,1-1,5 Gew.-%, bevorzugt 0,4-0,8 Gew.-%, Beschleuniger und 0,1-5 Gew.-%, bevorzugt 2-4 Gew.-% Initiator umfaßt.

In noch einer weiteren Ausführungsform der Erfindung kann vorgesehen sein, daß der Beschleuniger Methylhydroxyethylparatoluidin, Dimethylparatoluidin, Dihydroxyethylparatoluidin oder die Dihydroxypropylparatoluidin und/oder der Initiator Benzoylperoxid ist.

Auch ist bevorzugt, daß das Paraffin eine Mischung aus unterschiedlichen Paraffinen umfaßt, die unterschiedliche Erweichungspunkte aufweisen, insbesondere Paraffine mit einem Erweichungspunkt zwischen 46 und 48°C, Paraffine mit einem Erweichungspunkt zwischen 52 und 54°C und Paraffine mit einem Erweichungspunkt zwischen 63 und 66°C.

Die Aufgabe wird ferner dadurch gelöst, daß der Haftvermittler ein Phosphorsäureester ist, insbesondere Methacryloyloxyethylphosphat.

Es ist erfindungsgemäß vorgesehen, daß die Viskosität des (Meth)acrylatharzes vor dessen Aushärtung mindestens 250 mPa·s bei D = 1.000 1/s oder mindestens 300 mPa·s bei D = 100 1/s ist.

Es ist besonders bevorzugt, daß dem Acrylatharz ferner Farbmittel, wie Farbpigmente oder Farbpaste, zugesetzt ist.

Weiterhin kann das erfindungsgemäße (Meth)acrylatharz zur Reparatur und/oder Abdichtung von Röhren, insbesondere von Kanalröhren, verwendet werden.

Besonders bevorzugt ist die Verwendung in Röhren, die aus Steinzeug, Beton oder Kunststoff, wie Polyvinylchlorid, hergestellt sind.

Der Erfindung liegt die überraschende Erkenntnis zugrunde, daß mit dem erfindungsgemäßen (Meth)acrylatharz Reparaturen und/oder Abdichtungen, insbesondere von Röhren, schnell und einfach durchführbar sind. Die Verwendung des erfindungsgemäßen (Meth)acrylatharzes liefert eine äußerst schnelle Aushärtungszeit, die Verwendung ist im wesentlichen temperaturunabhängig möglich, und das verwendete (Meth)acrylatharz ist physiologisch unbedenklich. Ferner zeigt das erfindungsgemäße (Meth)acrylatharz Viskositäten, die dafür sorgen, daß das (Meth)acrylatharz bei einem Transport des Harzes bzw. der mit diesem Harz getränkten Matte nicht zu flüssig ist, so daß es abtropfen kann, und ferner nicht zu hoch viskos ist, so daß ein im wesentlichen vollständiges Benetzen und Durchtränken der Glasfasermatte möglich ist und ein Einschluß von Luft vermieden wird.

Von besonderer Bedeutung sind die Verwendung des Haftvermittlers sowie des in (Meth)acrylat löslichen Polymers in den angegebenen Mengen, die kombiniert im wesentlichen dafür sorgen, daß ein für die entsprechende Verwendung geeignetes (Meth)acrylatharz erhalten wird. Insbesondere ist hervorzuheben, daß das in dem (Meth)acrylatharz verwendete (Meth)acrylat vorteilhaft durch Hydroxy(meth)acrylat hydrophiliert wird. Bei Verwendung des erfindungsgemäßen (Meth)acrylatharzes wird ferner die wichtige Säurezahl in einem gewünschten Bereich eingestellt. Insbesondere der Zusatz des Entschäumers zu dem erfindungsgemäßen (Meth)acrylatharz sorgt dafür, daß dieses Harz auch zur Verwendung bei der Reparatur und/oder Abdichtung von Röhren gegenüber drückendem Wasser eingesetzt werden kann.

Der Begriff (Meth)acrylat, wie er hierin verwendet wird, umfaßt alle Acrylat- und Methacrylatharze. Die Verwendung erfindungsgemäßer (Meth)acrylatharze ist nicht auf die Reparatur bzw. Abdichtung von Röhren beschränkt.

Weitere Merkmale und Vorteile der vorliegenden Erfindung werden im folgenden veranschaulichend anhand von drei Beispielen erläutert, die jedoch nicht beabsichtigt sind, um den Schutzumfang in irgendeiner Form zu beschränken. Sofern nicht anders angegeben, beziehen sich alle Gew.-%-Angaben auf das (Meth)acrylatharz.

### Beispiel 1

5 kg (Meth)acrylatharz wurde hergestellt durch Mischen der folgenden Komponenten: 32,04 Gew.-% Methylmethacrylat, 33,00 Gew.-% Copolymer aus Methylmethacrylat und Butylmethacrylat (Acryperl 200, erhältlich von Cray Valley, Acryperl 200 ist ein Copolymer aus 66% Butylmethacrylat, 33% Methylmethacrylat und 1% Methacrylsäure mit einem Molekulargewicht von 55.000), 2,00 Gew.-% Ethylenglykoldimethacrylat, 0,80 Gew.-% Methylhydroxyethylparatoluidin, 0,30 Gew.-% Paraffin (Erweichungspunkt 46 bis 48°C), 0,30 Gew.-% Paraffin (Erweichungspunkt 52 bis 54°C), 0,20 Gew.-% Paraffin (Erweichungspunkt 63 bis 66°C), 0,50 Gew.-% Co-Stabilisator (Alkanox 240, erhältlich von Great Lakes; Alkanox 240 ist Tri-(2,4-di-tert-butyl-phenyl)phosphit), 0,06 Gew.-% 2,6-Ditert.-butyl-4-methylphenol, 30,00 Gew.-% Hydroxyethylmethacrylat, 0,30 Gew.-% Methacryloyloxyethylphosphat und 0,50 Gew.-% Entschäumer (BYK 052, erhältlich von BYK).

Die Viskosität des Acrylatharzes war bei D = 1.000 1/s 285 mPa·s und bei D = 100 1/s 340 mPa·s.

Die Viskositäten für die in den Beispielen hergestellten (Meth)acrylatharze wurden in einem Platte/Platte-Rotationsviskosimeter bestimmt, indem bei einer Temperatur von 25°C eine Fließkurve aufgestellt und entsprechende Werte bei einer Scherrate von 1000 bzw. 100 abgelesen wurden.

### Beispiel 2

5 kg (Meth)acrylatharz wurde durch Mischen der folgenden Komponenten hergestellt: 39,04 Gew.-% Methylmethacrylat, 26,00 Gew.-% Copolymer aus Methylmethacrylat und Ethylacrylat (Diakon LG156, erhältlich von Lucite, Diakon LG156 ist ein Copolymer aus 88 % Methylmethacrylat und 12 % Ethylacrylat mit einem Molekulargewicht von 80.000), 2,00 Gew.-% Ethylenglykoldimethacrylat, 0,80 Gew.-% Methylhydroxyethylparatoluidin, 0,30 Gew.-% Paraffin (Erweichungspunkt 46 bis 48°C), 0,30 Gew.-% Paraffin (Erweichungspunkt 52 bis 54°C), 0,20 Gew.-% Paraffin (Erweichungspunkt 63 bis 66°C), 0,50 Gew.-% Co-Stabilisator (Alkanox 240), 0,06 Gew.-% 2,6-Di-tert.-butyl-4-methylphenol, 30,00 Gew.-% Hydroxyethylmethacrylat, 0,30 Gew.-% Methacryloyloxyethylphosphat und 0,50 Gew.-% Entschäumer (BYK 052, erhältlich von BYK).

Die Viskosität dieses Acrylatharzes war bei D = 1.000 1/s größer als 1.000 mPa·s und bei D = 100 1/s 844 mPa·s.

### Beispiel 3

5 kg (Meth)acrylatharz wurde hergestellt durch Mischen der folgenden Komponenten: 32,47 Gew.-% Methylmethacrylat, 33,00 Gew.-% Copolymer aus Methylmethacrylat und Butylmethacrylat (Acryperl 200, erhältlich von Cray Valley), 2,00 Gew.-% Ethylenglykoldimethacrylat, 0,40 Gew.-% Methylhydroxyethylparatoluidin, 0,30 Gew.-% Paraffin (Erweichungspunkt 46 bis 48°C), 0,30 Gew.-% Paraffin (Erweichungspunkt 52 bis 54°C), 0,20 Gew.-% Paraffin (Erweichungspunkt 63 bis 66°C), 0,50 Gew.-% Co-Stabilisator (Alkanox 240), 0,03 Gew.-% 2,6-Di-tert.-butyl-4-methylphenol, 30,00 Gew.-% Hydroxyethylmethacrylat, 0,30 Gew.-% Methacryloyloxyethylphosphat und 0,50 Gew.-% Entschäumer (BYK 052, erhältlich von BYK).

Die Viskosität dieses Acrylatharzes war bei D = 1.000 1/s 344 mPa·s und bei D = 100 1/s 358 mPa·s.

### Beispiel 4

5 kg (Meth)acrylatharz wurde hergestellt durch Mischen der folgenden Komponenten: 39,57 Gew.-% Methylmethacrylat, 26,00 Gew.-% Copolymer aus Methylmethacrylat und Ethylacrylat (Diakon LG 156), 2,00 Gew.-% Ethylenglykoldimethacrylat, 0,80 Gew.-% Methylhydroxyethylparatoluidin, 0,30 Gew.-% Paraffin (Erweichungspunkt 46-48°C), 0,30 Gew.-% Paraffin (Erweichungspunkt 52-54°C), 0,20 Gew.-% Paraffin (Erweichungspunkt 63-66°C), 0,50 Gew.-% Co-Stabilisator (Alkanox 240), 0,03 Gew.-% 2,6-Di-tert.-butyl-4-methylphenol, 30,00 Gew.-% Hydroxyethylmethacrylat und 0,30 Gew.-% Methacryloyloxyethylphosphat.

### Beispiel 5

5 kg (Meth)acrylatharz wurde hergestellt durch Mischen der folgenden Komponenten: 62,98 Gew.-% Methylmethacrylat, 32,69 Gew.-% Copolymer aus Methylmethacrylat und Butylmethacrylat (Acryperl 200), 2,00 Gew.-% Ethylenglykoldimethacrylat, 1,00 Gew.-% Methylhydroxyethylparatoluidin, 0,20 Gew.-% Paraffin (Erweichungspunkt 46-48°C), 0,30 Gew.-% Paraffin (Erweichungspunkt 52-54°C), 0,30 Gew.-% Paraffin (Erweichungspunkt 63-66°C), 0,50 Gew.-% Co-Stabilisator (Alkanox 240), 0,03 Gew.-% 2,6-Di-tert.-butyl-4-methylphenol, 0,30 Gew.-% Methacryloyloxyethylphosphat und 0,50 Gew.-% Entschäumer (BYK 052).

### Vergleichsbeispiel 6

5 kg (Meth)acrylharz wurde hergestellt durch Mischen der folgenden Komponenten: 62,98 Gew.-% Methylmethacrylat, 32,69 Gew.-% Copolymer aus Methylmethacrylat und Butylmethacrylat (Acryperl 200), 2,00 Gew.-% Ethylenglykoldimethacrylat, 1,00 Gew.-% Methylhydroxyethylparatoluidin, 0,20 Gew.-% Paraffin (Erweichungspunkt 46-48°C), 0,30 Gew.-% Paraffin (Erweichungspunkt 52-54°C), 0,30 Gew.-% Paraffin (Erweichungspunkt 63-66°C), 0,50 Gew.-% Co-Stabilisator (Alkanox 240), 0,03 Gew.-% 2,6-Di-tert.-butyl-4-methylphenol.

Die sechs oben dargestellten (Meth)acrylatharze der Beispiele 1 bis 6 wurden zur Reparatur und/oder Abdichtung von Kanalröhren eingesetzt und jeweils mit etwa 3 Gew.-% Benzoylperoxid vermischt. Für einen Fachmann auf diesem Gebiet ist es offensichtlich, daß auch irgendein anderer Initiator zum Aushärten verwendet werden kann. Ferner ist es für einen Fachmann ohne weiteres ersichtlich, daß das erfindungsgemäße (Meth)acrylatharz auch thermisch oder mittels ultravioletter Strahlung oder auf irgendeine andere mögliche Art und Weise ausgehärtet werden kann.

Für jedes (Meth)acrylatharz der Beispiele 1 bis 6 wurden zwei glasierte, trockene Steinzeugröhren mit einem Durchmesser von 20 cm aneinander gesetzt, die mit einer mit dem erfindungsgemäßen (Meth)acrylatharz getränkten Matte verbunden werden sollten. Eine mit dem jeweiligen (Meth)acrylatharz getränkte Glasfasermatte wurde um einen Packer gelegt, und dieser Packer wurde dann in die Steinzeugröhren eingeführt, um die Verbindungsstelle zwischen den beiden Rohren abzudichten.

Die Temperatur während der Aushärtung innerhalb der Steinzeugröhren betrug 8°C. Die Aushärtezeit im Rohr betrug für die Beispiele 1 und 2 etwa 45 Minuten, nach denen das (Meth)acrylatharz vollständig klebfrei war. Nach 55 Minuten Aushärtezeit war das (Meth)acrylatharz nach Beispiel 3 auf seiner Oberfläche noch leicht klebrig.

Die abgedichteten Steinzeugröhren wurden anschließend einem Dichtigkeitstest nach DIN EN 1610 unterzogen. Dazu wurden die abgedichteten Steinzeugrohre mit Druckluft beaufschlagt (Anfangsdruck 200 mbar), wobei nach der DIN EN 1610 der Druckverlust innerhalb einer (an den Röhrenenden verschlossenen) Röhre innerhalb von 1,5 Minuten maximal 15 mbar betragen darf, wobei Druckverluste < 10 mbar als besonders gute Ergebnisse zu bezeichnen sind.

Die Ergebnisse der ermittelten Druckverluste für die Beispiele 1 bis 6 sind in der folgenden Tabelle dargestellt.

**Tabelle 1**

| Beispiel | Druckverlust [mbar] | |
|---|---|---|
| | in trockenem Rohr | in nassem Rohr |
| 1 | 3,7 | - |
| 2 | 0,4 | 0,0 |
| 3 | 0,6 | - |
| 4 | 0,5 | - |
| 5 | 0,5 | - |
| 6 (Vergleich) | 27,5 | - |
| * Das Rohr aus Beispiel 2 wurde vor dem Beschicken mit dem Packer mittels einer Blumenspritze mit einer wäßrigen Seifenlauge eingesprüht. Die Applikation der Matte erfolgte direkt auf die nasse Oberfläche. | | |

Wie aus der Tabelle eindrucksvoll ersichtlich ist, können mit dem erfindungsgemäßen (Meth)acrylatharz sehr gute Abdichtungen erzielt werden, die die nach der Prüfnorm maximal zulässigen Druckverluste deutlich unterschreiten. Das (Meth)acrylatharz aus Beispiel 2 zeigte dabei die besten Ergebnisse.

Wie insbesondere aus Beispiel 5 ersichtlich ist, kann ein geeignetes (Meth)acrylatharz auch erhalten werden, wenn für eine Anwendung in einer trockenen Röhre kein Hydroxy(meth)acrylat eingesetzt wird. Hingegen liefert ein (Meth)acrylatharz nach Vergleichsbeispiel 6, das kein Hydroxy(meth)acrylat, Entschäumer und Haftvermittler enthält, Druckverluste, die nicht zu einer gemäß der DIN EN 1610 geeigneten Abdichtung führen.

(Meth)acrylatharze gemäß der vorliegenden Erfindung können auch zur Abdichtung und/oder Reparatur von Röhren oder dergleichen gegenüber drückendem Wasser eingesetzt werden, wie es durch die nun folgenden Beispiele veranschaulicht wird.

### Beispiel 7

5 kg (Meth)acrylatharz wurde hergestellt durch Mischen der folgenden Komponenten: 32,14 Gew.-% Methylmethacrylat, 33,00 Gew.-% Copolymer aus Methylmethacrylat und Butylmethacrylat (Acryperl 200), 2,00 Gew.-% Ethylenglykoldimethacrylat, 0,70 Gew.-% Methylhydroxyethylparatoluidin, 0,30 Gew.-% Paraffin (Erweichungspunkt 46-48°C), 0,30 Gew.-% Paraffin (Erweichungspunkt 52-54°C), 0,20 Gew.-% Paraffin (63-66°C), 0,50 Gew.-% Co-Stabilisator (Alkanox 240), 0,06 Gew.-% 2,6-Di-tert.-butyl-4-methylphenol, 30,00 Gew.-% Hydroxyethylmethacrylat, 0,30 Gew.-% Methacryloyloxyethylphosphat und 0,50 Gew.-% Entschäumer (BYK 052).

Die Viskosität dieses Acrylatharzes war bei D = 1.000 1/s 402 mPa·s und bei T = 100 1/s 381 mPa·s.

### Beispiel 8

5 kg (Meth)acrylatharz wurde hergestellt durch Mischen der folgenden Komponenten: 40,64 Gew.-% Methylmethacrylat, 24,50 Gew.-% Copolymer aus Methylmethacrylat und Ethylacrylat (Diakon LG 156), 2,00 Gew.-% Ethylenglykoldimethacrylat, 0,70 Gew.-% Methylhydroxyethylparatoluidin, 0,30 Gew.-% Paraffin (Erweichungspunkt 46-48°C), 0,30 Gew.-% Paraffin (Erweichungspunkt 52-54°C), 0,20 Gew.-% Paraffin (Erweichungspunkt 63-66°C), 0,50 Gew.-% Co-Stabilisator (Alkanox 240), 0,06 Gew.-% 2,6-Di-tert.-butyl-4-methylphenol, 30,00 Gew.-% Hydroxyethylmethacrylat, 0,30 Gew.-% Methacryloyloxyethylphosphat und 0,50 Gew.-% Entschäumer (BYK 052).

Die Viskosität dieses Acrylatharzes war bei D = 1.000 1/s 522 mPa·s und bei D = 100 1/s 544 mPa·s.

### Beispiel 9

5 kg (Meth)acrylatharz wurde hergestellt durch Mischen der folgenden Komponenten: 55,14 Gew.-% Methylmethacrylat, 25,00 Gew.-% Copolymer aus Methylmethacrylat und Ethylacrylat (Diakon LG 156), 2,00 Gew.-% Ethylglykoldimethacrylat, 0,70 Gew.-% Methylhydroxyethylparatoluidin, 0,30 Gew.-% Paraffin (Erweichungspunkt 46-48°C), 0,30 Gew.-% Paraffin (Erweichungspunkt 52-54°C), 0,20 Gew.-% Paraffin (Erweichungspunkt 63-66°C), 0,50 Gew.-% Co-Stabilisator (Alkanox 240), 0,06 Gew.-% 2,6-Di-tert.-butyl-4-methylphenol, 15,00 Gew.-% Hydroxyethylmethacrylat, 0,30 Gew.-% Methacryloyloxyethylphosphat und 0,50 Gew.-% Entschäumer (BYK 052).

Die Viskosität dieses Acrylatharzes war bei D = 1.000 1/s 348 mPa·s und bei D = 100 1/s 373 mPa·s.

### Beispiel 10

5 kg (Meth)acrylatharz wurde hergestellt durch Mischen der folgenden Komponenten: 41,14 Gew.-% Methylmethacrylat, 24,50 Gew.-% Copolymer aus Methylmethacrylat und Ethylacrylat (Diakon LG 156), 2,00 Gew.-% Ethylenglykoldimethacrylat, 0,70 Gew.-% Methylhydroxyethylparatoluidin, 0,30 Gew.-% Paraffin (Erweichungspunkt 46-48°C), 0,30 Gew.-% Paraffin (Erweichungspunkt 52-54°C), 0,20 Gew.-% Paraffin (Erweichungspunkt 63-66°C), 0,50 Gew.-% Co-Stabilisator (Alkanox 240), 0,06 Gew.-% 2,6-Di-tert.-butyl-4-methylphenol, 30,00 Gew.-% Hydroxyethylmethacrylat, 0,30 Gew.-% Methacryloyloxyethylphosphat.

Die Viskosität dieses Acrylatharzes war bei D = 1.000 1/s 513 mPa·s und bei D = 100 1/s 535 mPa·s.

Die vier oben dargestellten (Meth)acrylatharze der Beispiele 7 bis 10 wurden zur Reparatur und/oder Abdichtung von Kanalröhren eingesetzt und jeweils mit etwa 3 Gew.-% Benzoylperoxid vermischt. Die Acrylatharze der Beispiele 7 bis 10 wurden zur Reparatur und/oder Abdichtung von Röhren gegenüber drückendem Wasser eingesetzt und geprüft. Zu diesem Zweck wird in einem T-Abzweigrohr aus Steinzeug über einen "Packer" eine mit dem entsprechenden Harz getränkte Glasfasermatte so eingesetzt, daß sie mittig unter dem senkrecht nach oben ragenden T-Stück des Rohres angeordnet ist und die Seitenbereiche des T-Stücks um etwa 15 cm überragt. Bevor und während der Packer an die richtige Stelle gebracht wird, wird ständig von oben Wasser in den Abzweig gegossen, was bspw. mittels eines Gartenschlauchs oder einfach mit einem Eimer erfolgen kann. Auch während der Packer aufgeblasen wird, wird Wasser mit etwa 0,1 Liter pro Sekunde nachgefüllt. Während der Aushärtezeit bleibt Wasser bis zum oberen Rand im Abzweig stehen. Nach dem Entfernen des Packers wird beobachtet, ob die Wassersäule erhalten bleibt oder durch die Glasfasermatte abtropft bzw. zwischen der Glasfasermatte und der Steinzeugwandung herausläuft. Die so abgedichteten Rohrstücke wurden ebenfalls einem Dichtigkeitstest nach der DIN EN 1610 unterzogen. Für die Harze nach den Beispielen 7 bis 9 war nach Entfernen des Packers kein Wasserdurchbruch festzustellen. Für das Beispiel 10 wurde ein Wasserdurchbruch sofort nach Entfernen festgestellt. Die Ergebnisse der ermittelten Druckverluste für die Beispiele 7 bis 10 sind in der folgenden Tabelle 2 dargestellt.

**Tabelle 2**

| Beispiel | Druckverlust [mbar] |
|---|---|
| 7 | 2,5 |
| 8 | 3 |
| 9 | 0 |
| 10 | 80 |

Wie aus der Tabelle 2 ersichtlich ist, sind die (Meth)acrylatharze, die gemäß den Beispielen 7-9 hergestellt worden sind, auch zur Reparatur und/oder Abdichtung von Röhren gegenüber drückendem Wasser sehr gut geeignet. Beispiel 10 zeigt, daß jedoch ohne den Entschäumer eine zufriedenstellende Abdichtung der Röhren gegenüber drückendem Wasser nicht erzielt werden kann, so daß bei einer Anwendung zur Reparatur und/oder Abdichtung von Röhren gegenüber drückendem Wasser der Einsatz des Entschäumers Voraussetzung für ein zufriedenstellendes Ergebnis ist.

## Patentansprüche

1. (Meth)acrylatharz, welches umfaßt:
| | |
|---|---|
| 30-40 Gew.-% | (Meth)acrylat |
| 25-35 Gew.-% | eines in (Meth)acrylat löslichen Polymers |
| 0,5-1 Gew.-% | Paraffin |
| 5-40 Gew.-% | Hydroxy(meth)acrylat |
| 0,2-1,0 Gew.-% | Haftvermittler und |
| 0,1-2 Gew.-% | Entschäumer, |
alle Gew.-%-Angaben bezogen auf das (Meth)acrylatharz.

2. (Meth)acrylatharz nach Anspruch 1, **dadurch gekennzeichnet, daß** das (Meth)acrylat Methylmethacrylat ist.

3. (Meth)acrylatharz nach einem der vorangehenden Ansprüche, **dadurch gekennzeichnet, daß** das in (Meth)acrylat lösliche Polymer ein (Meth)acrylat-Homopolymer und/oder ein Copolymer umfaßt.

4. (Meth)acrylatharz nach Anspruch 3, **dadurch gekennzeichnet, daß** das Homopolymer Polymethylmethacrylat ist.

5. (Meth)acrylatharz nach Anspruch 3 oder 4, **dadurch gekennzeichnet, daß** das Copolymer ein Copolymer aus Methylmethacrylat und Butylmethacrylat, aus Methylmethacrylat und Ethylacrylat oder aus Vinylchlorid und Vinylacetat ist.

6. (Meth)acrylatharz nach einem der vorangehenden Ansprüche, **dadurch gekennzeichnet, daß** das Hydroxy(meth)acrylat Hydroxyethylmethacrylat ist.

7. (Meth)acrylatharz nach einem der vorangehenden Ansprüche, **dadurch gekennzeichnet, daß** das (Meth)acrylatharz ferner 1-10 Gew.-% Vernetzungsmittel, bevorzugt 1-3 Gew.-%, enthält.

8. (Meth)acrylatharz nach Anspruch 7, **dadurch gekennzeichnet, daß** das Vernetzungsmittel Ethylenglykoldimethacrylat, 1,4-Butandioldimethacrylat und/oder TriEthylenglykoldimethacrylat ist.

9. (Meth)acrylatharz nach einem der vorangehenden Ansprüche, **dadurch gekennzeichnet, daß** das (Meth)acrylatharz 0,1-1,0 Gew.-% Entschäumer (bezogen auf das (Meth)acrylatharz) umfaßt.

10. (Meth)acrylatharz nach einem der vorangehenden Ansprüche, **dadurch gekennzeichnet, daß** das (Meth)acrylatharz weitere übliche Additive, wie 0,1-2 Gew.-% Co-Stabilisator und/oder 0,01-0,1 Gew.-% Stabilisator ,umfaßt.

11. (Meth)acrylatharz nach Anspruch 10, **dadurch gekennzeichnet, daß** das (Meth)acrylatharz 0,02 bis 0,07 Gew.-% Stabilisator und/oder 0,5-1,0 Gew.-% Co-Stabilisator umfaßt.

12. (Meth)acrylatharz nach einem der Ansprüche 10 oder 11, **dadurch gekennzeichnet, daß** der Stabilisator 2,6-Di-tert.-butyl-4-methylphenol und der Co-Stabilisator Tri-(2,4-di-tert.-butyl-phenyl)phosphit ist.

13. (Meth)acrylatharz nach einem der vorangehenden Ansprüche, **dadurch gekennzeichnet, daß** das (Meth)acrylatharz ferner 0,1-1,5 Gew.-%, bevorzugt 0,4-0,8 Gew.-%, Beschleuniger und 0,1-5 Gew.-%, bevorzugt 2-4 Gew.-%, Initiator umfaßt.

14. (Meth)acrylatharz nach Anspruch 13, **dadurch gekennzeichnet, daß** der Beschleuniger Methylhydroxyethylparatoluidin, Dimethylparatoluidin, Dihydroxyethylparatoluidin oder Dihydroxypropylparatoluidin und/oder der Initiator Benzoylperoxid ist.

15. (Meth)acrylatharz nach einem der vorangehenden Ansprüche, **dadurch gekennzeichnet, daß** das Paraffin eine Mischung aus unterschiedlichen Paraffinen umfaßt, die unterschiedliche Erweichungspunkte aufweisen, insbesondere Paraffine mit einem Erweichungspunkt zwischen 46 und 48°C, Paraffine mit einem Erweichungspunkt zwischen 52 und 54°C und Paraffine mit einem Erweichungspunkt zwischen 63 und 66°C.

16. (Meth)acrylatharz nach einem der vorangehenden Ansprüche, **dadurch gekennzeichnet, daß** der Haftvermittler ein Phosphorsäureester ist, insbesondere Methacryloyloxyethylphosphat.

17. (Meth)acrylatharz nach einem der vorangehenden Ansprüche, **dadurch gekennzeichnet, daß** die Viskosität des (Meth)acrylatharzes vor dessen Aushärtung mindestens 250 mPa·s bei D = 1.000 1/s oder mindestens 300 mPa·s bei D = 100 1/s ist.

18. (Meth)acrylatharz nach einem der vorangehenden Ansprüche, **dadurch gekennzeichnet, daß** dem (Meth)acrylatharz ferner Farbmittel, wie Farbpigmente oder Farbpaste, zugesetzt ist.

19. Verwendung des (Meth)acrylatharzes nach einem der vorangehenden Ansprüche 1 bis 18 zur Reparatur und/oder Abdichtung von Röhren, insbesondere von Kanalröhren.

20. Verwendung nach Anspruch 19, **dadurch gekennzeichnet, daß** die Röhren aus Steinzeug, Beton oder Kunststoff, wie Polyvinylchlorid, hergestellt sind.

## Claims

1. (Meth)acrylate resin, which comprises :
| | |
|---|---|
| 30-40% by weight | (meth)acrylate |
| 25-35% by weight | of a polymer soluble in (meth)acrylate |
| 0.5-1% by weight | paraffin |
| 5-40% by weight | hydroxy(meth)acrylate |
| 0.2-1.0% by weight | adhesion promoter and |
| 0 1-2% by weight | defoamer, |
all percentages by weight being based on the (meth)acrylate resin.

2. (Meth)acrylate resin according to claim 1, **characterized in that** the (meth)acrylate is methyl methacrylate

3. (Meth)acrylate resin according to one of the preceding claims, charactenzed in that the polymer soluble in (meth)acrylate comprises a (meth)acrylate homopolymer and/or a copolymer

4. (Meth)acrylate resin according to claim 3, **characterized in that** the homopolymer is polymethyl methacrylate

5. (Meth)acrylate resin according to claim 3 or 4, **characterized in that** the copolymer is a copolymer of methyl methacrylate and butyl methacrylate, of methyl methacrylate and ethyl acrylate or of vinyl chloride and vinyl acetate

6. (Meth)acrylate resin according to one of the preceding claims, **characterized in that** the hydroxy(meth)acrylate is hydroxyethyl methacrylate

7. (Meth)acrylate resin according to one of the preceding claims, **characterized in that** the (meth)acrylate resin further contains 1-10% by weight crosslinking agent, preferably 1-3% by weight

8. (Meth)acrylate resin according to claim 7, **characterized in that** the crosslinking agent is ethylene glycol dimethacrylate, 1 4-butanediol dimethacrylate and/or triethylene glycol dimethacrylate.

9. (Meth)acrylate resin according to one of the preceding claims, **characterized in that** the (meth)acrylate resin comprises 0.1-1.0% by weight defoamer (based on the (meth)acrylate resin).

10. (Meth)acrylate resin according to one of the preceding claims, **characterized in that** the (meth)acrylate resin comprises further conventional additives, such as 0.1-2% by weight co-stabilizer and/or 0.01-0.1% by weight stabilizer.

11. (Meth)acrylate resin according to claim 10, **characterized in that** the (meth)acrylate resin comprises 0.02 to 0.07% by weight stabilizer and/or 0.5-1.0% by weight co-stabilizer,

12. (Meth)acrylate resin according to one of claims 10 or 11, **characterized in that** the stabilizer is 2,6-di-tert-butyl-4-methylphenol and the co-stabilizer is tri-(2,4-di-tert-butylphenyl) phosphite.

13. (Meth)acrylate resin according to one of the preceding claims, **characterized in that** the (meth)acrylate resin further comprises 0.1-1.5% by weight, preferably 0.4-0.8% by weight, accelerator and 0.1-5% by weight, preferably 2-4% by weight, initiator.

14. (Meth)acrylate resin according to claim 13, **characterized in that** the accelerator is methylhydroxyethyl-para-toluidine, dimethyl-para-faluidine, dihydroxyethyl-para-toluidine or dihydroxypropyl-para-toluidine and/or the initiator is benzoyl peroxide.

15. (Meth)acrylate resin according to one of the preceding claims, **characterized in that** the paraffin comprises a mixture of different paraffins which have different softening points, in particular paraffins having a softening point between 46 and 48°C, paraffins having a softening point between 52 and 54°C and paraffins having a softening point between 63 and 66°C.

16. (Meth)acrylate resin according to one of the preceding claims, **characterized in that** the adhesion promoter is a phosphoric acid ester, in particular methacryloyloxyethyl phosphate.

17. (Meth)acrylate resin according to one of the preceding claims, **characterized in that** the viscosity of the (meth)acrylate resin prior to the curing thereof is at least 250 mPa·s at D = 1000 l/s or at least 300 mPa·s at D = 100 l/s.

18. (Meth)acrylate resin according to one of the preceding claims, **characterized in that** colorants, such as colour pigments or a dye paste, are also added to the (meth)acrylate resin.

19. Use of the (meth)acrylate resin according to one of the preceding claims 1 to 18 for repairing and/or sealing pipes, in particular sewage pipes.

20. Use according to claim 19, **characterized in that** the pipes are made from stoneware, concrete or plastic, such as polyvinyl chloride.

## Revendications

1. Résine de (meth)acrylate qui comprend : :
30-40% en poids de (meth)acrylate
25-35% en poids d'un polymère soluble dans le (meth)acrylate,
0,5-1% en poids de paraffine,
5-40% en poids d'hydroxy (méth)acrylate,
0,2 a 1 0% en poids d un promoteur d adhérence,
0,1 a 2% en poids d'un agent anti-mousse
tous ces pourcentages étant exprimés par rapport à la résine de (meth)acrylate.

2. Résine de (meth)acrylate selon la revendication 1, **caractérisée en ce que** le (meth)acrylate est le methylméthacrylate

3. Résine de (meth)acrylate selon l'une quelconque des revendications precedentes, **caractérisée en ce que** le polymère soluble dans le (meth)acrylate contient un homopolymère de (meth)acrylate et/ou copolymère de (meth)acrylate.

4. Résine de (méth)acrylate selon la revendication 3, **caractérisée en ce que** l'homopolymère est le polymèthylméthacrylate.

5. Résine de (meth)acrylate selon la revendication 3 ou 4, caractétisée en ce que le copolymère est un copolymère de méthylmethacrylate et de butylméthacrylate un copolymère de méthylmethacrylate et d'ethylacrylate ou un copolymère de chlorrure de vinyle et d acetate de vinyle

6. Résine de (méth)acrylate selon l'une quelconque des revendications précédentes, **caractérisée en ce que** l'hydroxy(méth)acrylate est l'hydroxyethyl méthacrylate.

7. Résine de (meth)acrylate selon l'une quelconque des revendications précédentes, **caractérisée en ce que** le (méth)acrylate comprend en outre de 1 a 10% en poids, de préférence de 1 a 3% en poids, d agent de reticulation.

8. Résine de (méth)acrylate selon la revendication 7, **caractérisée en ce que** l'agent de reticulation est l'éthylèneglycoldiméthacrylate, le 1,4-butanedioldiméthacrylate et/ou le triéthylèneglycoldiméthacrylate.

9. Résine de (méth)acrylate selon l'une quelconque des revendications précédentes, **caractérisée en ce que** la résine de (méth)acrylate comprend de 0,1 a 1% en poids d'agent anti-mousse (exprimés par rapport a la résine de (méth)acrylate).

10. Résine de (méth)acrylate selon lune quelconque des revendications precedentes, **caractérisée en ce que** la résine de (méth)acrylate, comprend en outre d'autres additifs usuels, tels que 0,1 à 2% en poids de co-stabilisant et/ou 0,01 a a 0,1 % en poids d'un stabilisant.

11. Résine de (méth)acrylate selon la revendication 10, **caractérisée en ce que** la résine de (méth)acrylate comprend de 0,02 à 0 07% en poids de stabilisant et/ou de 0,5 à 1,0% en poids de co-stabilisant.

12. Résine de (méth)acrylate selon la revendication 10 ou 11, **caractérisée en ce que** le stabilisant est le 2 6-di-tert -butyl-4-méthylphenol et le co-stabilisant est le tris (2,4-di-tert -butyl-phenyl) phosphite.

13. Résine de (méth)acrylate selon l'une quelconque des revendications précédentes, **caractérisée en ce que** la résine de (meth)acrylate comprend en outre de 0 1 a 1,5% en poids, de préférence de 0 4 a 0 8% en poids d accelerateur et de 0 1 a 5% en poids d'initiateur, de préférence de 2-4% en poids d'initiateur.

14. Résine de (méth)acrylate selon la revendication 13, **caractérisée en ce que** 1 accelerateur consiste en méthylhydroxyethylparatoluidine, diméthylparatoluidine, dihydroxyéthylparatoluidine ou dihydroxypropylparatoluidine et/ou l'initiateur est le peroxyde de benzoyle.

15. Résine de (meth)acrylate selon l'une quelconque des revendications précédentes, **caractérisée en ce que** la paraffine comprend un mélange de différentes paraffines ayant des points de ramollissement différents, en particulier de paraffines ayant un point de ramollissement compris entre 46 et 48 °C, de paraffines ayant un point de ramollissement compris entre 52 et 54°C et de paraffines ayant un point de ramollissement compris entre 63 et 66°C

16. Résine de (méth)acrylate selon l'une quelconque des revendications precedentes **caractérisée en ce que** le promoteur d'adhérence est un ester d'acide phosphorique, en particulier le phosphate de methacryloyloxyéthyle.

17. Résine (meth)acrylate selon l'une quelconque des revendications précédentes, **caracterisée en ce que** la viscosité de la résine de (méth)acrylate avant son durcissement est d au moins 250 mPa s a D = 1,000 ℓ/s ou au moins 300 mPa.s a D = 100 ℓ/s.

18. Résine de (méth)acrylate selon l'une quelconque des revendications précédentes, **caractérisée en ce que** à la résine de (méth)acrylate sont en outre ajoutés des colorants, tels des pigments ou pâtes colores

19. Utilisation de la résine (méth)acrylate selon l'une quelconque des revendications 1 a 18 précédentes pour la réparation et/ou le scellement de tubes en particulier de tubes de canalisations.

20. Utilisation selon la revendication 19, **caractérisée en ce que** les tubes consistant en tubes de grès, de beton ou de plastique, tels le chlorure de polyvinyle.
